# EUROPEAN PATENT APPLICATION

(11) **EP 3 174 053 A1**
(43) Date of publication of application: **31.05.2017**
(21) Application number: 16195917.6
(22) Date of filing: 27.10.2016
(51) Int. Cl.: G11B 27/10, G11B 27/11, H04N 21/47

(54) **METHOD, APPARATUS AND SYSTEM FOR PLAYING MULTIMEDIA DATA, COMPUTER PROGRAM AND RECORDING MEDIUM**

(30) Priority: 30.11.2015 CN 201510856759
(71) Applicant: Xiaomi Inc., Beijing 100085 (CN)
(72) Inventor: FU, Qiang, Haidian District, Beijing 100085 (CN); GAO, Ziguang, Haidian District, Beijing 100085 (CN); HOU, Enxing, Haidian District, Beijing 100085 (CN)
(74) Representative: Sadler, Peter Frederick

(57) **Abstract**

The invention relates to a method, an apparatus and a system for playing multimedia data, a computer program and a recording medium, which pertain to the field of computer technology. The method comprises: sending, by a first terminal, to a server a request for acquiring play record information; receiving, by the server, the request for acquiring play record information sent by the first terminal; acquiring, by the server, play record information of a second terminal bound to the first terminal; controlling, by the server, the first terminal to continue play of corresponding target multimedia data according to the play record information; receiving, by the first terminal, the play record information of the second terminal bound to the first terminal, which is sent by the server; and continuing, by the first terminal, the play of corresponding target multimedia data according to the play record information. The efficiency of starting the play of multimedia data can be increased by using the invention.

## Description

### TECHNICAL FIELD

The present invention relates to the field of computer technologies, and more particularly, to methods, apparatus and systems for playing multimedia data, as well as a computer program and a recording medium for carrying out the methods.

### BACKGROUND

With the development of computer technologies, there are an increasing number, and a greater variety, of multimedia content such as video data, audio data, and the multimedia content can be played in an increasing number of forms. For example, terminals such as smart televisions and smart mobile phones can be used to play multimedia data.

In the prior art, if a user, who is watching certain multimedia data using a multimedia application on a smart device, desires to change the smart device and continue watching on another device, he or she may close the current application on the smart device and then open a multimedia application on another smart device. At this time, the user needs to find the multimedia data in the multimedia application by searching and then find the play time progress on the play time axis, or bar, of the multimedia data so as to watch the multimedia data from the correct position.

The inventor has found at least the following problem in the prior art. When a user changes the smart device during the playing of multimedia data, the user needs to find the multimedia data in the multimedia application by searching and then find the play time progress on the play time axis, or bar, of the multimedia data to watch or listen to the multimedia data from the position reached on the first smart device, which may lead to low efficiency in starting the playing of the multimedia data.

### SUMMARY

In order to address the problem in the prior art, methods, apparatus and systems for playing multimedia data, a computer program and a recording medium are provided. The technical solutions are provided as follows.

According to a first aspect of embodiments of the invention, a method for playing multimedia data is provided, the method comprising: receiving a request for acquiring play record information, the request being sent by a first terminal; acquiring play record information of a second terminal bound to the first terminal; controlling the first terminal to continue play of corresponding target multimedia data according to the play record information.

Optionally, the acquiring the play record information of the second terminal bound to the first terminal comprises: sending, to all terminals bound to the first terminal, notifications of uploading play record information respectively; receiving play record information sent by said all terminals; acquiring, from the play record information sent by said all terminals, the play record information of the second terminal.

Thereby, the play record information corresponding to the multimedia data currently watched can be obtained.

Optionally, the acquiring, from the play record information sent by said all terminals, the play record information of the second terminal comprises: determining the second terminal from said all terminals, the second terminal satisfying at least one of the following conditions of: having the same type as the first terminal, being the last one updating the play record information, having logged in a first account which is the same as or associated with that logged in by the first terminal.

Optionally, the acquiring the play record information of a second terminal bound to the first terminal comprises: receiving the play record information, which is sent by the second terminal when it closes a multimedia application.

Thereby, the play record information corresponding to the multimedia data which the user has not completely watched on another terminal can be obtained.

Optionally, the method further comprises: receiving a request for sharing multimedia, the request for sharing multimedia being sent from the first terminal and carrying current play record information of the first terminal and an account identification of a target account; and sending, to a target terminal logging in the target account, the current play record information of the first terminal so that the target terminal continues play of corresponding multimedia data according to the current play record information of the first terminal.

Thereby, the user can share the currently watched multimedia data with other users.

Optionally, the target multimedia data comprises video data or audio data.

Optionally, the play record information comprises a multimedia data identification and a play progress time point corresponding to the target multimedia data; or the play record information comprises a channel identification corresponding to the target multimedia data.

According to a second aspect of embodiments of the invention, a method for playing multimedia data is provided, the method comprising: sending to a server a request for acquiring play record information; receiving play record information of a second terminal bound to the first terminal, which is sent by the server; and continuing play of corresponding target multimedia data according to the play record information.

Optionally, the sending to the server the request for acquiring play record information comprises: sending to the server the request for acquiring play record information when a start of a multimedia application is detected. The continuing the play of the corresponding target multimedia data according to the play record information comprises: controlling the multimedia application to play the corresponding target multimedia data according to the play record information.

Thereby, a multimedia application can be caused to play the target multimedia data corresponding to the play record information.

Optionally, the continuing the play of the corresponding target multimedia data according to the play record information comprises: acquiring, from the play record information, a multimedia data identification and a play progress time point; and continuing the play of the target multimedia data corresponding to the multimedia data identification from the play progress time point.

Thereby, the user can watch the multimedia data which has not been completely watched in another terminal.

Optionally, the continuing the play of the corresponding target multimedia data according to the play record information comprises: acquiring, from the play record information, a multimedia channel identification; and continuing the play of the target multimedia data corresponding to the multimedia channel identification.

Thereby, the user can watch the multimedia data corresponding to the multimedia channel identification which was watched in another terminal.

Optionally, before sending to the server the request for acquiring the play record information, the method further comprises: outputting play triggering information for triggering the play of the target multimedia data. The sending to the server the request for acquiring play record information comprises: sending to the server the request for acquiring play record information, in response to detection of a triggering operation on the play triggering information.

Thereby, the user can choose whether to watch the multimedia data which was watched in another terminal.

According to a third aspect of embodiments of the invention, an apparatus for playing multimedia data is provided, the apparatus comprising: a first receiving module for receiving a request for acquiring play record information, the request being sent by a first terminal; an acquiring module for acquiring play record information of a second terminal bound to the first terminal; a controlling module for controlling the first terminal to continue play of corresponding target multimedia data according to the play record information.

Optionally, the acquiring module comprises a sending sub-module, a receiving sub-module and an acquiring sub-module, wherein: the sending sub-module is configured to send, to all terminals bound to the first terminal, notifications of uploading play record information respectively; the receiving sub-module is configured to receive play record information sent by said all terminals; the acquiring sub-module is configured to acquire, from the play record information sent by said all terminals, the play record information of the second terminal.

Optionally, the acquiring sub-module is configured to: determine the second terminal from said all terminals, the second terminal satisfying at least one of the following conditions of: having the same type as the first terminal, being the last one updating the play record information, having logged in a first account which is the same as or associated with that logged in by the first terminal.

Optionally, the acquiring module is configured to: receive the play record information which is sent by the second terminal when it closes a multimedia application.

Optionally, the apparatus further comprises: a second receiving module for receiving a request for sharing multimedia, the request for sharing multimedia being sent from the first terminal and carrying current play record information of the first terminal and an account identification of a target account; and a sending module for sending, to a target terminal logging in the target account, the current play record information of the first terminal so that the target terminal continues play of corresponding multimedia data according to the current play record information of the first terminal.

Optionally, the target multimedia data comprises video data or audio data.

Optionally, the play record information comprises a multimedia data identification and a play progress time point corresponding to the target multimedia data; or the play record information comprises a channel identification corresponding to the target multimedia data.

According to a fourth aspect of embodiments of the invention, an apparatus for playing multimedia data is provided, the apparatus comprising: a sending module for sending to a server a request for acquiring play record information; a receiving module for receiving the play record information of a second terminal bound to the first terminal, which is sent by the server; a playing module for continuing play of corresponding target multimedia data according to the play record information.

Optionally, the sending module is configured to: send to the server the request for acquiring play record information when a start of a multimedia application is detected. The playing module is configured to: control the multimedia application to play the corresponding target multimedia data according to the play record information.

Optionally, the playing module comprises an acquiring sub-module and a playing sub-module. The acquiring sub-module is configured to acquire, from the play record information, a multimedia data identification and a play progress time point; and the playing sub-module is configured to continue the play of the target multimedia data corresponding to the multimedia data identification from the play progress time point.

Optionally, the acquiring sub-module is configured to acquire, from the play record information, a multimedia channel identification; and the playing sub-module is configured to continue the play of the target multimedia data corresponding to the multimedia channel identification.

Optionally, the apparatus further comprises: an outputting module for, before the request for acquiring play record information is sent to the server, output play triggering information for triggering the play of the target multimedia data. The sending module is configured to: send to the server the request for acquiring play record information, in response to detection of a triggering operation on the play triggering information.

According to a fifth aspect of embodiments of the invention, a system for playing multimedia data is provided, the system comprising a server and a first terminal. The server is configured to: receive a request for acquiring play record information, the request being sent by the first terminal; acquire play record information of a second terminal bound to the first terminal; control the first terminal to continue play of corresponding target multimedia data according to the play record information. The first terminal is configured to: send to the server the request for acquiring play record information; receive the play record information of the second terminal bound to the first terminal, which is sent by the server; continue the play of the corresponding target multimedia data according to the play record information.

In one particular embodiment, the steps of the method for playing multimedia data are determined by computer program instructions.

Consequently, according to a sixth aspect, the invention is also directed to a computer program for executing the steps of a method for playing multimedia data as described above when this program is executed by a computer.

This program can use any programming language and take the form of source code, object code or a code intermediate between source code and object code, such as a partially compiled form, or any other desirable form.

The invention is also directed to a computer-readable information medium containing instructions of a computer program as described above.

The information medium can be any entity or device capable of storing the program. For example, the support can include storage means such as a ROM, for example a CD ROM or a microelectronic circuit ROM, or magnetic storage means, for example a diskette (floppy disk) or a hard disk.

Alternatively, the information medium can be an integrated circuit in which the program is incorporated, the circuit being adapted to execute the method in question or to be used in its execution.

The solutions provided by embodiments of the invention may provide the following advantageous effects.

In the embodiments of the invention, a first terminal sends to a server a request for acquiring play record information; the server receives the request for acquiring play record information sent by the first terminal; the server acquires play record information of a second terminal bound to the first terminal; the server controls the first terminal to continue play of corresponding target multimedia data according to the play record information; the first terminal receives the play record information of the second terminal bound to the first terminal, which is sent by the server; and the first terminal continues the play of corresponding target multimedia data according to the play record information. Thereby, when a user changes the terminal during the play of multimedia data, the terminal used after the change may automatically acquire the play record information on the terminal used before the change, and then automatically play the multimedia data corresponding to the play record information. Accordingly, the user can watch the multimedia data he or she previously watched on the terminal used before the change without searching and finding, thereby improving the efficiency in starting the play of the multimedia data.

It is to be understood that both the foregoing general description and the following detailed description are exemplary and explanatory only and are not restrictive of the invention.

### BRIEF DESCRIPTION OF THE DRAWINGS

The accompanying drawings, which are incorporated in and constitute a part of this specification, illustrate embodiments consistent with the invention and, together with the description, serve to explain the principles of the invention. In the drawings:
Fig. 1 is a flow chart of playing multimedia data illustrated according to an exemplary embodiment;
Fig. 2 is a flow chart of playing multimedia data illustrated according to an exemplary embodiment;
Fig. 3 is a flow chart of playing multimedia data illustrated according to an exemplary embodiment;
Fig. 4 is a schematic diagram illustrating an interface display of a terminal according to an exemplary embodiment;
Fig. 5 is a schematic diagram illustrating an interface display of a terminal according to an exemplary embodiment;
Fig. 6 is a schematic diagram illustrating an interface display of a terminal according to an exemplary embodiment;
Fig. 7 is a structure schematic diagram of an apparatus for playing multimedia data according to an exemplary embodiment;
Fig. 8 is a structure schematic diagram of an apparatus for playing multimedia data according to an exemplary embodiment;
Fig. 9 is a structure schematic diagram of an apparatus for playing multimedia data according to an exemplary embodiment;
Fig. 10 is a structure schematic diagram of an apparatus for playing multimedia data according to an exemplary embodiment;
Fig. 11 is a structure schematic diagram of an apparatus for playing multimedia data illustrated according to an exemplary embodiment;
Fig. 12 is a structure schematic diagram of an apparatus for playing multimedia data according to an exemplary embodiment;
Fig. 13 is a structure schematic diagram of a server according to an exemplary embodiment;
Fig. 14 is a structure schematic diagram of a terminal according to an exemplary embodiment.

The above drawings illustrate specific embodiments of the invention which will be described in detail hereinafter. These drawings and description are not intended to limit the scope of the inventive concept in any way but to explain the concept of the invention to those skilled in the art by referring to the specific embodiments.

### DETAILED DESCRIPTION

Reference will now be made in detail to certain embodiments, examples of which are illustrated in the accompanying drawings. The following description refers to the accompanying drawings in which the same numbers in different figures represent the same or similar elements unless otherwise indicated. The implementations set forth in the following description of embodiments do not represent all implementations consistent with the invention. Instead, they are merely examples of devices and methods consistent with aspects related to the invention as recited in the appended claims.

An embodiment of the invention provides a method for playing multimedia data, which can also be referred to as multimedia content. This method for playing multimedia data can be implemented by a server and a terminal collectively. The server can be a background server for a management application of a smart device, and the terminal can be a terminal having installed therein a multimedia application and a management application.

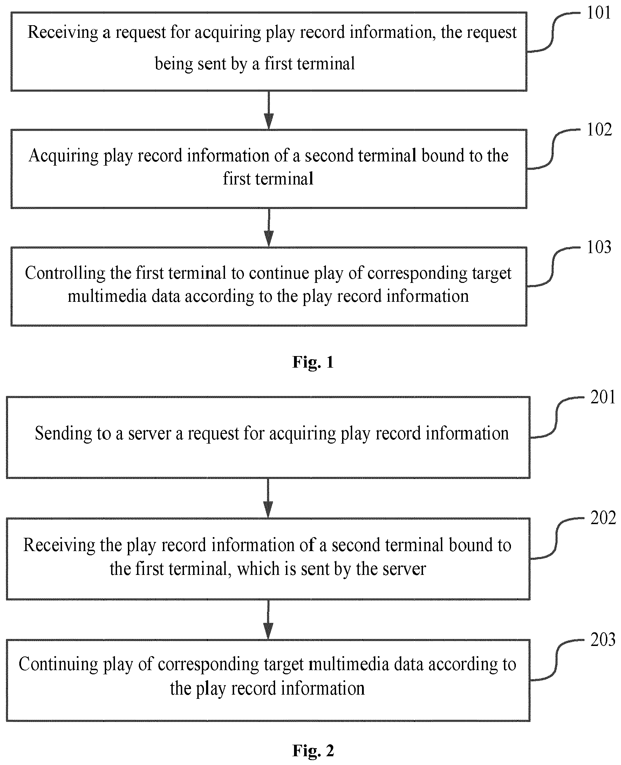

As shown in Fig. 1, the operational procedure of the server in the method may include the following steps.

In Step 101, a request for acquiring play record information is received, the request being sent by a first terminal.

In Step 102, play record information of a second terminal bound to the first terminal is acquired.

In Step 103, the first terminal is controlled to continue play of corresponding target multimedia data according to the play record information.

As shown in Fig. 2, the operational procedure of the terminal in the method may include the following steps.

In Step 201, a request for acquiring play record information is sent to a server.

In Step 202, play record information of a second terminal bound to the first terminal, which is sent by the server, is received.

In Step 203, play of corresponding target multimedia data is continued according to the play record information.

In the embodiment of the invention, a first terminal sends to a server a request for acquiring play record information; the server receives the request for acquiring play record information sent by the first terminal; the server acquires play record information of a second terminal bound to the first terminal; the server controls the first terminal to continue play of corresponding target multimedia data according to the play record information; the first terminal receives the play record information of the second terminal bound to the first terminal, which is sent by the server; and the first terminal continues the play of corresponding target multimedia data according to the play record information. Thereby, when a user changes the terminal during the play of multimedia data, the terminal used after the change may automatically acquire the play record information on the terminal used before the change, and then automatically play the multimedia data corresponding to the play record information. Accordingly, the user can watch the multimedia data he or she previously watched on the terminal used before the change without searching and finding, thereby improving the efficiency in starting the play of the multimedia data.

Another embodiment of the invention provides a method for playing multimedia data. This method for playing multimedia data can be implemented by a server and terminals (a first terminal and a second terminal) collectively. The server may be a background server for a management application of a smart device (e.g. a smart home application) and may be provided with a processor, a memory, a transceiver, etc. The processor may be used for processes in the procedure of playing the multimedia data, the memory may be used to store data required or produced during the procedure of playing the multimedia data, and the transceiver may be used to receive and transmit messages. The terminal may be a smart mobile phone, a tablet computer, a smart television, etc. The terminal may have installed therein a multimedia application and a management application for the smart device, and may be provided with a processor, a memory, a transceiver, etc. The processor may be used for processes in the procedure of playing the multimedia data, the memory may be used to store data required or produced during the procedure of playing the multimedia data, and the transceiver may be used to receive and transmit messages. The terminal may also be provided with an input/output device such as a screen, etc. The screen may be used to display a management application interface, a multimedia data play interface, etc. of the smart device. The screen may be a touch screen.

Before implementing the method, the user may bind together a first terminal and a second terminal which are usually used to play multimedia data. For example, the user may install a management application for smart devices in each of the first terminal and the second terminal, and then start the management application. The terminals may each display a login interface of the management application. The user may input an account identification and a password, and click a confirmation key to trigger the terminal to send to the server a terminal identification of the terminal. The server may store the correspondence between the terminal identification and the account identification. The user may input the same account identification and password in the management applications of both the first terminal and the second terminal. Thereby, in the correspondence stored in the server, this account identification may correspond to the first terminal and the second terminal so that the first terminal and the second terminal are bound together.

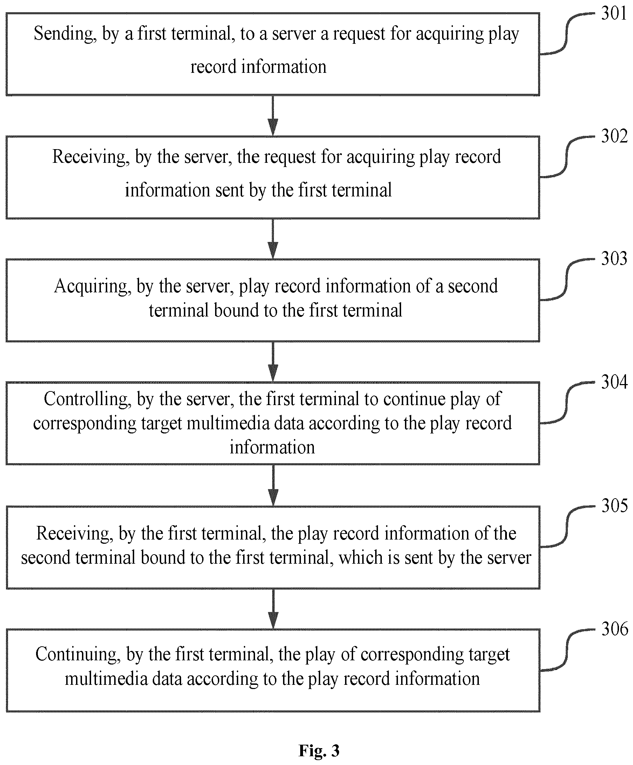

In the following, the operational procedure shown in Fig. 3 will be explained in detail in connection with implementations.

In Step 301, a first terminal sends to a server a request for acquiring play record information.

In an implementation, the user closes the multimedia application of the second terminal when the user is using the multimedia application of the second terminal to watch a video, and then opens the multimedia application of the first terminal to watch this multimedia data. At this time, the first terminal may send to the server a request for acquiring play record information, the request for acquiring play record information carrying the terminal identification of the first terminal. For example, the user watching multimedia data on a smart television in the parlour closes the smart television in the parlour, walks into the bedroom, and uses a mobile phone to watch the multimedia data. When the multimedia application on the mobile phone is started, the mobile phone may send to the server a request for acquiring play record information.

Optionally, the request for acquiring play record information is sent to the server when start up of a multimedia application is detected.

In an implementation, the user closes the multimedia application of the second terminal when the user is using the multimedia application of the second terminal to watch multimedia data, and then opens the multimedia application of the first terminal to watch this multimedia data. At this time, the user may click an option on the multimedia application of the first terminal. The first terminal receives the click instruction and starts the multimedia application. When the management application detects the start of the multimedia application, it triggers the first terminal to send to the server a request for acquiring play record information, the request for acquiring play record information carrying the terminal identification of the first terminal. For example, the user watching a video on a smart television in the parlour closes the smart television in the parlour, walks into the bedroom, and uses a mobile phone to watch the video. When the multimedia application on the mobile phone is started, the management application detects the start of the multimedia application and triggers the mobile phone to send to the server a request for acquiring play record information.

Optionally, before the first terminal sends to the server the request for acquiring play record information, the first terminal may output play triggering information for triggering the play of the target multimedia data and send to the server the request for acquiring play record information in response to detection of a triggering operation on the play triggering information.

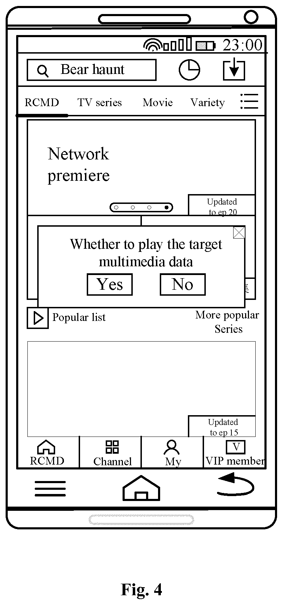

In an implementation, as shown in Fig. 4, when the first terminal detects the start of the multimedia application, the first terminal may display, in an interface, a dialog box for the play triggering information for the target multimedia data. The dialog box displays a prompt of whether to play the target multimedia data, a "Yes" key and a "No" key. The user may click the "Yes" key, and the first terminal may send to the server the request for acquiring play record information when it detects the click instruction.

Optionally, the play record information includes a multimedia data identification, identifying the content/multimedia data being output by the first terminal, and a play progress time point corresponding to the target multimedia data; or the play record information includes a channel identification corresponding to the target multimedia data.

In an implementation, if the user watched certain multimedia data by using the second terminal, the server may acquire a multimedia data identification and a play progress time point corresponding to the target multimedia data. For example, if the user watched the movie "A Chinese Odyssey" to the fiftieth minute by using the second terminal, the server may acquire the multimedia data identification as A Chinese Odyssey and the play progress time point as the fiftieth minute.

Or, if the user watched multimedia data on a certain channel by using the second terminal, the play record information acquired by the server may be the channel identification corresponding to the played multimedia data. For example, if the user watched CCTV news broadcast live on CCTV-1 by using a smart television, then the channel identification acquired by the server is CCTV-1. If the user used a live video application installed on the terminal to watch a live video, the information acquired by the server may be the channel identification corresponding to the played video. For example, if the user used a live video application to watch a live football game broadcast on CCTV-5, the video play information acquired by the server is CCTV-5.

In Step 302, the request for acquiring play record information sent by the first terminal is acquired.

In an implementation, the server receives the request for acquiring play record information sent by the first terminal, and then may analyze the request to acquire, from it, the terminal identification of the first terminal.

In Step 303, the server acquires play record information of a second terminal bound to the first terminal.

In an implementation, after determining the terminal identification of the first terminal, the server can acquire play record information of a second terminal bound to the first terminal according to the identification of the first terminal.

Optionally, the play record information of the second terminal bound to the first terminal may be acquired by: sending, to all terminals bound to the first terminal, notifications of uploading play record information respectively; receiving play record information sent by said all terminals; and acquiring, from the play record information sent by said all terminals, the play record information of the second terminal.

In an implementation, after acquiring the terminal identification of the first terminal, the server may acquire terminal identifications of all terminals bound to the first terminal, and then send, to all terminals bound to the first terminal, notifications of uploading play record information respectively. All the terminals bound to the first terminal, after receiving the notifications of uploading play record information, acquire their respective play record information, and send the play record information to the server. The server, after receiving the play record information sent by all the terminals, may acquire the play record information of the second terminal.

Optionally, the second terminal is determined from the all terminals, and the second terminal satisfies at least one of the following conditions of: having the same type as the first terminal, being the last one updating the play record information, having logged in a first account which is the same as or associated with that logged in by the first terminal.

In an implementation, when the server determines the second terminal from all the terminals bound to the first terminal, the second terminal satisfies at least one of the following conditions: the second terminal has the same type as the first terminal (e.g., both of them can be used to play a video, or both of them can be used to play a music); among all terminals bound to the first terminal, the second terminal is the last one updating the play record information (for example, among all terminals bound to the first terminal, terminals other than the second terminal updated the play record information on October 10 while the second terminal updated the play record information on October 11); the second terminal has logged in a first account which is the same as that logged in by the first terminal (e.g., the second terminal and the first terminal log in by using the same account) or associated with that logged in by the first terminal (e.g., a binding relationship has been established).

Optionally, the play record information, which is sent by the second terminal when it closes a multimedia application, is received.

In an implementation, the user closes a multimedia application on the second terminal when the user uses the multimedia application to watch certain multimedia data. A management application installed on the second terminal detects the close of the multimedia application, records an identification of the multimedia data currently played and a play progress time point or records a multimedia channel identification, and sends to the server play record information corresponding to the played multimedia data. The play record information may carry the multimedia data identification corresponding to the multimedia data currently played and the play progress time point or carry the channel identification. After receiving the play record information, the server stores the play record information as the play record information of the second terminal.

In Step 304, the server controls the first terminal to continue play of corresponding target multimedia data according to the play record information.

In an implementation, the play record information acquired by the server includes the multimedia identification and the play progress time point corresponding to the multimedia data currently played. This multimedia data can be used as the target multimedia data, and then the multimedia identification and the play progress time point corresponding to the target multimedia data are sent to the first terminal according to the terminal identification of the first terminal, so that the first terminal can continue the play of the target multimedia data from the play progress time point. If the play record information acquired by the server is the channel identification corresponding to the played multimedia data, this channel identification can be sent to the first terminal so that the first terminal can play the multimedia data on a corresponding channel.

Optionally, the target multimedia data includes video data or audio data.

In an implementation, the target multimedia data may be video data (e.g. a TV series, a movie, etc.), or may be audio data (e.g. a music, a broadcast content, etc.).

In Step 305, the first terminal receives the play record information of the second terminal bound to the first terminal, which is sent by the server.

In an implementation, the first terminal receives the play record information of the second terminal bound to the first terminal which is sent by the server, and then may analyze the play record information and obtain, from the play record information, the multimedia data identification and the play progress time point or the multimedia channel identification.

In Step 306, the first terminal continues the play of the corresponding target multimedia data according to the play record information.

In an implementation, the first terminal may play the corresponding target multimedia data according to the multimedia data identification and the play progress time point carried by the play record information, or may play the corresponding target multimedia data according to the multimedia channel identification in the play record information.

Optionally, the first terminal may control the multimedia application to play the corresponding target multimedia data according to the play record information.

In an implementation, if the multimedia data identification and the play progress time point are obtained after the first terminal analyzes the play record information, the target multimedia data corresponding to the multimedia data identification may be searched for, and then the multimedia application may be controlled to play the target multimedia data from the play progress time point. If the multimedia channel identification is obtained after the first terminal analyzes the play record information, a channel corresponding to the multimedia channel identification may be searched for, and then the multimedia application may be controlled to play the multimedia data being currently played on the channel.

Optionally, the first terminal may control the multimedia application to continue the play of the multimedia data from the play progress time point by: acquiring, from the play record information, a multimedia data identification and a play progress time point; and continuing the play of the target multimedia data corresponding to the multimedia data identification from the play progress time point.

In an implementation, after acquiring, from the play record information, the multimedia data identification and the play progress time point, the first terminal may search for corresponding target multimedia data according to the multimedia data identification, and then control the multimedia application to continue the play of the target multimedia data from the play progress time point. For example, the multimedia data identification contained in the play record information is "Painted Skin" and the play progress time point is the fiftieth minute and the twenty-third second, so the multimedia application continues the play of "Painted Skin" from the fiftieth minute and the twenty-third second.

Optionally, the first terminal may control the multimedia application to play the target multimedia data corresponding to the multimedia channel identification by: acquiring, from the play record information, a multimedia channel identification; and continuing the play of the target multimedia data corresponding to the multimedia channel identification.

In an implementation, after acquiring the multimedia channel identification from the play record information, the first terminal may search, according to the multimedia channel identification, for multimedia data being currently played as the target multimedia data, and then may control the multimedia application to play the target multimedia data. For example, if the multimedia channel identification contained in the play record information is CCTV-1 and if the multimedia data being currently displayed on CCTV-1 is CCTV news, the multimedia application may play CCTV news.

Embodiments of the invention further provide a method for sharing, by a user, multimedia data with other users, which may include: receiving a request for sharing multimedia, the request for sharing multimedia being sent from the first terminal and carrying current play record information of the first terminal and an account identification of a target account; and sending, to a target terminal logging in the target account, the current play record information of the first terminal so that the target terminal continues play of corresponding target multimedia data according to the current play record information of the first terminal.

In an implementation, a multimedia application or a management application may provide the user with a sharing key. The user may click the sharing key to share multimedia data with friends. The embodiment of the invention is described by taking an example where a multimedia application provides the user with a sharing key and the shared multimedia data is video data. When the user uses the multimedia application in the first terminal to watch a certain video, a video play interface displays a video play screen and options such as a volume key, a sharing key, etc. If the video needs to be shared with friends, the sharing key may be clicked to trigger the first terminal to acquire the current play record information and display a dialog box for adding a target account. The user may input the account identification (e.g. a mobile phone number, an email address, etc.) of the target account into the dialog box, and click a confirmation key. After receiving the click instruction, the first terminal sends to the server a request for sharing multimedia, the request carrying the current play record information of the first terminal and the account identification of the target account. After receiving the request for sharing a video, the server acquires the account identification of the target account, and then sends, to the target terminal having logged in the target account, the current play record information of the first terminal.

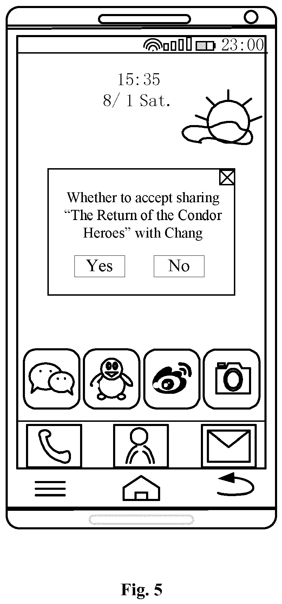

As illustrated in Fig. 5, after the target terminal receives the current play record information of the first terminal, the target terminal displays in an interface whether to accept sharing XXX video data with XXX (for example, whether to accept sharing "The Return of the Condor Heroes" with ZHANG San), if the current play record information, which is obtained by analysis, is a multimedia data identification. If the user of the target terminal accepts the sharing, a "Yes" option may be clicked to trigger the target terminal to display a multimedia application selection dialog box, in which options for multimedia applications installed on the target terminal are displayed to select from. The user may click an option for a multimedia application to select the multimedia application. After detecting the click instruction, the target terminal starts the multimedia application, searches for the video, and controls the multimedia application to play the video data.

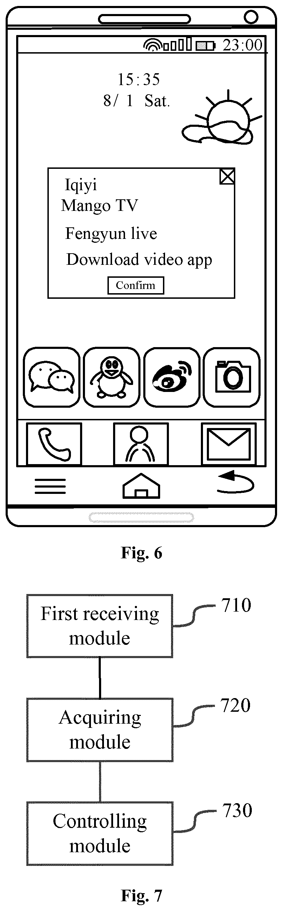

After the target terminal receives the current play record information of the first terminal, the target terminal displays in an interface whether to accept sharing XXX channel with XXX, if the current play record information, which is obtained by an analysis, is a multimedia channel identification. If the user of the target terminal accepts the sharing, a "Yes" option may be clicked to trigger the target terminal to display a multimedia application selection dialog box, in which options for multimedia applications installed on the target terminal (e.g. an Iqiyi option, a Fengyun live option, etc.) are displayed as shown in Fig. 6. The user may click a multimedia application option to select a certain multimedia application, and click a confirmation key. After detecting the click instruction, the target terminal starts the multimedia application, searches for the channel, and controls the multimedia application to play the video data corresponding to the channel.

Furthermore, an option of downloading a multimedia application may further displayed in the multimedia application selection dialog box. If the target terminal has no a multimedia application installed therein or if there is no multimedia application suitable to play video data shared by the first terminal, the multimedia application downloading option may be clicked. Then, the confirmation key is clicked to trigger the entry into a multimedia application downloading interface, so that the user can download a suitable multimedia application.

In the embodiment of the invention, a first terminal sends to a server a request for acquiring play record information; the server receives the request for acquiring play record information sent by the first terminal; the server acquires play record information of a second terminal bound to the first terminal; the server controls the first terminal to continue play of corresponding target multimedia data according to the play record information; the first terminal receives the play record information of the second terminal bound to the first terminal, which is sent by the server; and the first terminal continues the play of corresponding target multimedia data according to the play record information. Thereby, when a user changes the terminal during the play of multimedia data, the terminal used after the change may automatically acquire the play record information on the terminal used before the change, and then automatically play the multimedia data corresponding to the play record information. Accordingly, the user can watch the multimedia data he or she previously watched on the terminal used before the change without searching and finding, thereby improving the efficiency in starting the play of the multimedia data.

Another embodiment of the invention further provides an apparatus, which may be applied in a server, for playing multimedia data. As illustrated in Fig. 7, the apparatus includes: a first receiving module 710, an acquiring module 720, and a controlling module 730.

The first receiving module 710 is configured to receive a request for acquiring play record information, the request being sent by a first terminal.

The acquiring module 720 is configured to acquire play record information of a second terminal bound to the first terminal.

The controlling module 730 is configured to control the first terminal to continue play of corresponding target multimedia data according to the play record information.

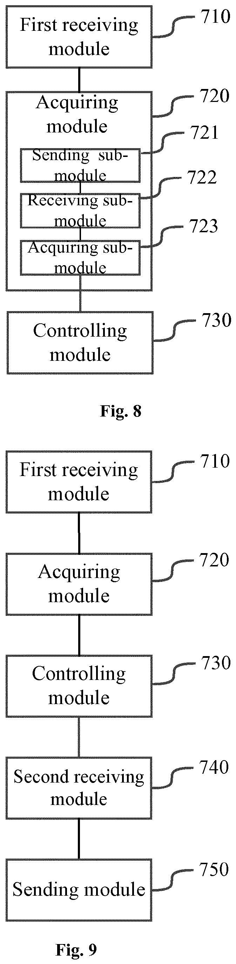

Optionally, as illustrated in Fig. 8, the acquiring module 720 comprises a sending sub-module 721, a receiving sub-module 722 and an acquiring sub-module 723.

The sending sub-module 721 is configured to send, to all terminals bound to the first terminal, notifications of uploading play record information respectively.

The receiving sub-module 722 is configured to receive play record information sent by said all terminals.

The acquiring sub-module 723 is configured to acquire, from the play record information sent by said all terminals, the play record information of the second terminal.

Optionally, the acquiring sub-module 723 is configured to determine the second terminal from the all terminals, the second terminal satisfying at least one of the following conditions of: having the same type as the first terminal, being the last one updating the play record information, having logged in a first account which is the same as or associated with that logged in by the first terminal.

Optionally, the acquiring module 720 is configured to: receive the play record information, which is sent by the second terminal when it closes a multimedia application.

Optionally, as illustrated in Fig. 9, the apparatus for playing multimedia data further includes: a second receiving module 740 for receiving a request for sharing multimedia, the sharing request for multimedia being sent from the first terminal and carrying current play record information of the first terminal and an account identification of a target account; and a sending module 750 for sending, to a target terminal having logged in the target account, the current play record information of the first terminal so that the target terminal continues play of corresponding multimedia data according to the current play record information of the first terminal.

Optionally, the target multimedia data includes: video data or audio data.

Optionally, the play record information includes a multimedia data identification and a play progress time point corresponding to the target multimedia data; or the play record information includes a channel identification corresponding to the target multimedia data.

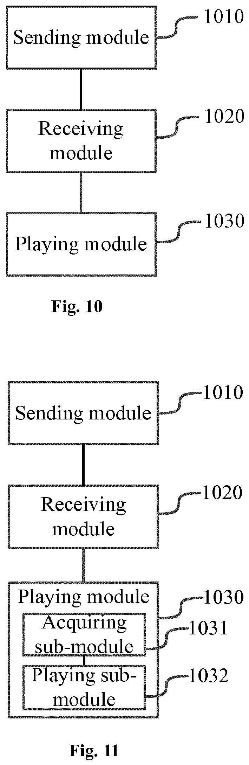

Based on the same technical concept, an embodiment of the invention provides an apparatus, which can be applied in the first terminal, for playing multimedia data. As illustrated in Fig. 10, the apparatus includes: a sending module 1010, a receiving module 1020, and a playing module 1030.

The sending module 1010 is configured to send to a server a request for acquiring play record information.

The receiving module 1020 is configured to receive play record information of a second terminal bound to the first terminal, which is sent by the server.

The playing module 1030 is configured to continue play of corresponding target multimedia data according to the play record information.

Optionally, the sending module 1010 is configured to: send to the server the request for acquiring play record information when a start of a multimedia application is detected. The playing module 1030 is configured to: control the multimedia application to play the corresponding target multimedia data according to the play record information.

Optionally, as illustrated in Fig. 11, the playing module 1030 includes an acquiring sub-module 1031 and a playing sub-module 1032. The acquiring sub-module 1031 is configured to acquire, from the play record information, a multimedia data identification and a play progress time point. The playing sub-module 1032 is configured to continue the play of the target multimedia data corresponding to the multimedia data identification from the play progress time point.

Optionally, the acquiring sub-module 1031 is configured to acquire, from the play record information, a multimedia channel identification. The playing sub-module 1032 is configured to continue the play of the target multimedia data corresponding to the multimedia channel identification.

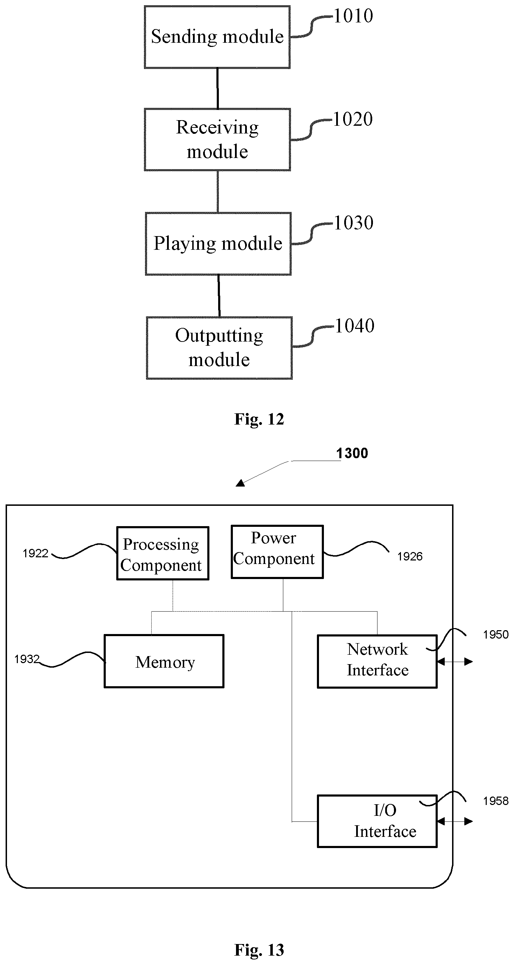

Optionally, as illustrated in Fig. 12, the apparatus for playing multimedia data further includes: an outputting module 1040 for, before the request for acquiring play record information is sent to the server, outputting play triggering information for triggering the play of the target multimedia data. The sending module 1010 is configured to: send to the server the request for acquiring play record information, in response to detection of a triggering operation on the play triggering information.

In the embodiment of the invention, a first terminal sends to a server a request for acquiring play record information; the server receives the request for acquiring play record information sent by the first terminal; the server acquires play record information of a second terminal bound to the first terminal; the server controls the first terminal to continue play of corresponding target multimedia data according to the play record information; the first terminal receives the play record information of the second terminal bound to the first terminal, which is sent by the server; and the first terminal continues the play of corresponding target multimedia data according to the play record information. Thereby, when a user changes the terminal during the play of multimedia data, the terminal used after the change may automatically acquire the play record information on the terminal used before the change, and then automatically play the multimedia data corresponding to the play record information. Accordingly, the user can watch the multimedia data he or she previously watched on the terminal used before the change without searching and finding, thereby improving the efficiency in starting the play of the multimedia data.

With respect to the apparatus in the above embodiments, the way by which modules perform operations have been described in detail in the related method embodiments, and thus will be omitted here.

It should be noted that the apparatus for displaying multimedia data provided by the above embodiments are described by taking the above division into various functional modules as an example. In practical application, the above functions can be accomplished by different functional modules as needed. That is, the internal structure of apparatus can be divided into different functional modules to implement all or part functions described above. In addition, the methods for playing multimedia data according to the above embodiments and the embodiments of the apparatus for playing multimedia data belong to the same concept. For detailed implementations of the apparatus, reference can be made to the corresponding method embodiments and the description thereof is omitted here.

Another exemplary embodiment of the invention provides a system for playing multimedia data. The system includes a server and a first terminal.

The server is configured to receive a request for acquiring play record information, the request being sent by the first terminal; acquire play record information of a second terminal bound to the first terminal; control the first terminal to continue play of corresponding target multimedia data according to the play record information.

The first terminal is configured to send to the server the request for acquiring play record information; receive the play record information of the second terminal bound to the first terminal, which is sent by the server; continue the play of the corresponding target multimedia data according to the play record information.

In the embodiment of the invention, a first terminal sends to a server a request for acquiring play record information; the server receives the request for acquiring play record information sent by the first terminal; the server acquires play record information of a second terminal bound to the first terminal; the server controls the first terminal to continue play of corresponding target multimedia data according to the play record information; the first terminal receives the play record information of the second terminal bound to the first terminal, which is sent by the server; and the first terminal continues the play of corresponding target multimedia data according to the play record information. Thereby, when a user changes the terminal during the play of multimedia data, the terminal used after the change may automatically acquire the play record information on the terminal used before the change, and then automatically play the multimedia data corresponding to the play record information. Accordingly, the user can watch the multimedia data he or she previously watched on the terminal used before the change without searching and finding, thereby improving the efficiency in starting the play of the multimedia data.

Another exemplary embodiment of the invention provides a server. Referring to Fig. 13, the server 1300 comprises: a processing component 1922, which further includes one or more processors; and storage resources represented by a memory 1932, for storing instructions, i.e., applications, executable by the processing component 1922. The applications stored in the memory 1932 may include one or more modules each corresponding to a set of instructions. Further, the processing component 1922 is configured to execute instructions to perform the above method for play multimedia data.

The server 1300 can further include: a power component 1926 configured to perform power management for the server 1300, a wired or wireless network interface 1950 configured to connect the server 1300 to a network, and an input/output (IO) interface 1958. The server 1300 can operate based on an operating system stored in the memory 1932, e.g., Windows Server^{™}, MAC OS X^{™}, Unix^{™}, Linux^{™}, FreeBSD^{™}, or the like.

The memory of the server 1300 may store one or more programs. The one or more processors are configured to execute instructions contained in the one or more programs to: receive a request for acquiring play record information, the request being sent by a first terminal; acquire play record information of a second terminal bound to the first terminal; and control the first terminal to continue play of corresponding target multimedia data according to the play record information.

Optionally, the acquiring the play record information of the second terminal bound to the first terminal includes: sending, to all terminals bound to the first terminal, notifications of uploading play record information respectively; receiving play record information sent by said all terminals; acquiring, from the play record information sent by said all terminals, the play record information of the second terminal.

Optionally, the acquiring, from the play record information sent by said all terminals, the play record information of the second terminal includes determining the second terminal from the all terminals, the second terminal satisfying at least one of the following conditions of: having the same type as the first terminal, being the last one updating the play record information, having logged in a first account which is the same as or associated with that logged in by the first terminal.

Optionally, the acquiring the play record information of the second terminal bound to the first terminal includes: receiving the play record information, which is sent by the second terminal when it closes a multimedia application.

Optionally, the method for playing multimedia data further includes: receiving a request for sharing multimedia, the request for sharing multimedia being sent from the first terminal and carrying current play record information of the first terminal and an account identification of a target account; and sending, to a target terminal having logged in the target account, the current play record information of the first terminal so that the target terminal continues play of corresponding target multimedia data according to the current play record information of the first terminal.

Optionally, the target multimedia data includes: video data or audio data.

Optionally, the play record information includes a multimedia data identification and a play progress time point corresponding to the target multimedia data; or the play record information includes a channel identification corresponding to the target multimedia data.

In the embodiment of the invention, a first terminal sends to a server a request for acquiring play record information; the server receives the request for acquiring play record information sent by the first terminal; the server acquires play record information of a second terminal bound to the first terminal; the server controls the first terminal to continue play of corresponding target multimedia data according to the play record information; the first terminal receives the play record information of the second terminal bound to the first terminal, which is sent by the server; and the first terminal continues the play of corresponding target multimedia data according to the play record information. Thereby, when a user changes the terminal during the play of multimedia data, the terminal used after the change may automatically acquire the play record information on the terminal used before the change, and then automatically play the multimedia data corresponding to the play record information. Accordingly, the user can watch the multimedia data he or she previously watched on the terminal used before the change without searching and finding, thereby improving the efficiency in starting the play of the multimedia data.

Another exemplary embodiment of the invention provides a terminal, which may be a handset, a tablet computer or the like.

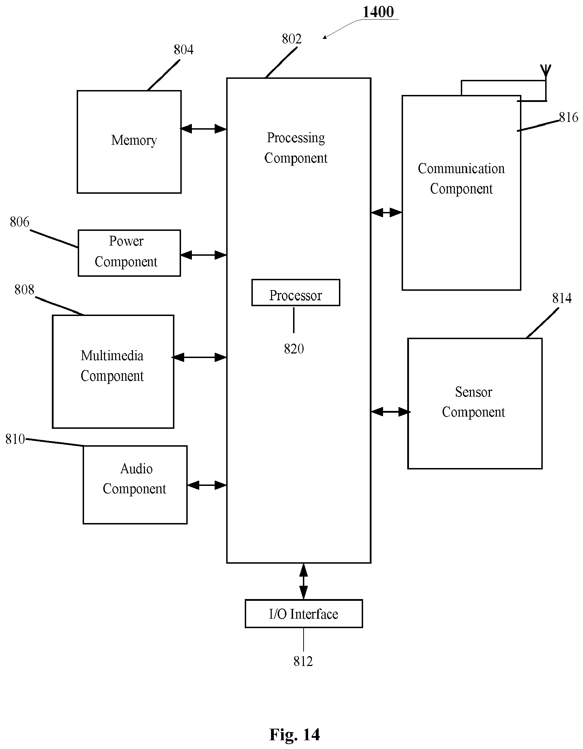

Referring to Fig. 14, the terminal 1400 may include one or more of the following components: a processing component 802, a memory 804, a power supply component 806, a multimedia component 808, an audio component 810, an input/output (I/O) interface 812, a sensor component 814 and a communication component 816.

The processing component 802 generally controls the overall operations of the terminal 1400, for example, display, phone call, data communication, camera operation and record operation. The processing component 802 may include one or more processors 820 to execute instructions to perform all or part of the steps in the above described methods. In addition, the processing component 802 may include one or more modules to facilitate the interaction between the processing component 802 and other components. For example, the processing component 802 may include a multimedia module to facilitate the interaction between the processing component 808 and the processing component 802.

The memory 804 is configured to store various types of data to support the operation performed on the terminal 1400. Examples of such data include instructions for any applications or methods operated on the terminal 1400, contact data, phonebook data, messages, pictures, video, etc. The memory 804 may be implemented using any type of volatile or non-volatile memory devices, or a combination thereof, such as a static random access memory (SRAM), an electrically erasable programmable read-only memory (EEPROM), an erasable programmable read-only memory (EPROM), a programmable read-only memory (PROM), a read-only memory (ROM), a magnetic memory, a flash memory, a magnetic or optical disk.

The power component 806 provides power to various components of the terminal 1400. The power component 806 may include a power supply management system, one or more power sources, and any other components associated with the generation, management, and distribution of power in the terminal 1400.

The multimedia component 808 includes a screen providing an output interface between the terminal 1400 and the user. In some embodiments, the screen may include a Liquid Crystal Display (LCD) and a Touch Panel (TP). If the screen includes the touch panel, the screen may be implemented as a touch screen to receive input signals from the user. The touch panel includes one or more touch sensors to sense touches, swipes, and gestures on the touch panel. The touch sensors may not only sense a boundary of a touch or swipe action, but also sense a period of time and a pressure associated with the touch or swipe action. In some embodiments, the multimedia component 808 includes a front camera and/or a rear camera. The front camera and the rear camera may receive external multimedia data while the terminal 1400 is in an operation mode, such as a photographing mode or a video mode. Each of the front camera and the rear camera may be a fixed optical lens system or have focus and optical zoom capability.

The audio component 810 is configured to output and/or input audio signals. For example, the audio component 810 includes a microphone ("MIC") configured to receive an external audio signal when the terminal 1400 is in an operation mode, such as a call mode, a recording mode, and a voice recognition mode. The received audio signal may be further stored in the memory 804 or transmitted via the communication component 816.

The I/O interface 812 provides an interface between the processing component 802 and peripheral interface modules, such as a keyboard, a click wheel, buttons, and the like. The buttons may include, but are not limited to, a home button, a volume button, a starting button, and a locking button.

The sensor component 814 includes one or more sensors to provide status assessments of various aspects of the terminal 1400. For instance, the sensor component 814 may detect an open/closed status of the terminal 1400, relative positioning of components, e.g., the display and the keypad, of the terminal 1400, a change in position of the terminal 1400 or a component of the terminal 1400, a presence or absence of user contact with the terminal 1400, an orientation or an acceleration/deceleration of the terminal 1400, and a change in temperature of the terminal 1400. The sensor component 814 may include a proximity sensor configured to detect the presence of nearby objects without any physical contact. The sensor component 814 may also include a light sensor, such as a CMOS or CCD image sensor, for use in imaging applications. In some embodiments, the sensor component 814 may also include an accelerometer sensor, a gyroscope sensor, a magnetic sensor, a pressure sensor, a microwave sensor or a temperature sensor.

The communication component 816 is configured to facilitate wired or wireless communication between the terminal 1400 and other devices. The terminal 1400 can access a wireless network based on a communication standard, such as WiFi, 2G, or 3G, or a combination thereof. In one exemplary embodiment, the communication component 816 receives a broadcast signal or broadcast related information from an external broadcast management system via a broadcast channel. In one exemplary embodiment, the communication component 816 further includes a near field communication (NFC) module to facilitate short-range communications. For example, the NFC module may be implemented based on a radio frequency identification (RFID) technology, an infrared data association (IrDA) technology, an ultra-wideband (UWB) technology, a Bluetooth (BT) technology, and other technologies.

In exemplary embodiments, the terminal 1400 may be implemented with one or more application specific integrated circuits (ASICs), digital signal processors (DSPs), digital signal processing devices (DSPDs), programmable logic devices (PLDs), field programmable gate arrays (FPGAs), controllers, micro-controllers, microprocessors, or other electronic components, for performing the above described methods.

In exemplary embodiments, there is also provided a non-transitory computer-readable storage medium including instructions, such as included in the memory 804, executable by the processor 820 of the terminal 1400, for performing the above-described methods. For example, the non-transitory computer-readable storage medium may be a ROM, a RAM, a CD-ROM, a magnetic tape, a floppy disc, an optical data storage device, and the like.

When executed by the processor of a terminal, the instructions in the non-transitory computer-readable storage medium cause the terminal to perform the above method, which comprises: sending to a server a request for acquiring play record information; receiving play record information of a second terminal bound to the first terminal, which is sent by the server; and continuing play of corresponding target multimedia data according to the play record information.

Optionally, the sending to the server the request for acquiring play record information comprises: sending to the server the request for acquiring play record information when a start of a multimedia application is detected. The continuing the play of the corresponding target multimedia data according to the play record information comprises: controlling the multimedia application to play the corresponding target multimedia data according to the play record information.

Optionally, the continuing the play of the corresponding target multimedia data according to the play record information comprises: acquiring, from the play record information, a multimedia data identification and a play progress time point; and continuing the play of the target multimedia data corresponding to the multimedia data identification from the play progress time point.

Optionally, the continuing the play of the corresponding target multimedia data according to the play record information comprises: acquiring, from the play record information, a multimedia channel identification; and continuing the play of the target multimedia data corresponding to the multimedia channel identification.

Optionally, before sending to the server the request for acquiring the play record information, the method further comprises: outputting play triggering information for triggering the play of the target multimedia data. The sending to the server the request for acquiring play record information comprises: sending to the server the request for acquiring play record information, in response to detection of a triggering operation on the play triggering information.

In the embodiment of the invention, a first terminal sends to a server a request for acquiring play record information; the server receives the request for acquiring play record information sent by the first terminal; the server acquires play record information of a second terminal bound to the first terminal; the server controls the first terminal to continue play of corresponding target multimedia data according to the play record information; the first terminal receives the play record information of the second terminal bound to the first terminal, which is sent by the server; and the first terminal continues the play of corresponding target multimedia data according to the play record information. Thereby, when a user changes the terminal during the play of multimedia data, the terminal used after the change may automatically acquire the play record information on the terminal used before the change, and then automatically play the multimedia data corresponding to the play record information. Accordingly, the user can watch the multimedia data he or she previously watched on the terminal used before the change without searching and finding, thereby improving the efficiency in starting the play of the multimedia data.

Other embodiments of the invention will be apparent to those skilled in the art from consideration of the specification and practice of the invention disclosed here. This application is intended to cover any variations, uses, or adaptations of the invention following the general principles thereof and including such departures from the present disclosure as come within known or customary practice in the art. It is intended that the specification and examples be considered as exemplary only, with a true scope and spirit of the invention being indicated by the appended claims.

Where functional modules are referred to in apparatus embodiments for carrying out various steps of the described method(s) it will be understood that these modules may be implemented in hardware, in software, or a combination of the two. When implemented in hardware, the modules may be implemented as one or more hardware modules, such as one or more application specific integrated circuits. When implemented in software, the modules may be implemented as one or more computer programs that are executed on one or more processors.

It will be appreciated that the present invention is not limited to the exact construction that has been described above and illustrated in the accompanying drawings, and that various modifications and changes can be made without departing from the scope thereof. It is intended that the scope of the invention only be limited by the appended claims.

## Claims

1. A method for playing multimedia data, comprising, at a server:
receiving (101) a request for acquiring play record information, the request being sent by a first terminal, the play record information comprising information regarding multimedia data being played on a given terminal, the play record information being indicative of the progress reached in outputting target multimedia data or the channel on which target multimedia data is output;
acquiring (102) play record information of a second terminal bound to the first terminal;
controlling (103) the first terminal to continue play of corresponding target multimedia data according to the play record information.

2. The method of claim 1, wherein the acquiring the play record information of the second terminal bound to the first terminal comprises, at the server:
sending, to all terminals bound to the first terminal, notifications of uploading play record information respectively;
receiving play record information sent by said all terminals;
acquiring, from the play record information sent by said all terminals, the play record information of the second terminal.

3. The method of claim 2, wherein the acquiring, from the play record information sent by said all terminals, the play record information of the second terminal comprises, at the server:
determining the second terminal from said all terminals, the second terminal satisfying at least one of the following conditions of: having the same type as the first terminal, being the last one to update the play record information, having logged into a first account which is the same as, or associated with, that logged in by the first terminal.

4. The method of any preceding claim, wherein the acquiring the play record information of the second terminal bound to the first terminal comprises, at the server:
receiving the play record information, which is sent by the second terminal when it closes a multimedia application.

5. The method of any preceding claim, further comprising, at the server:
receiving a request for sharing multimedia, the request for sharing multimedia being sent from the first terminal and carrying current play record information of the first terminal and an account identification of a target account;
sending, to a target terminal having logged in the target account, the current play record information of the first terminal so that the target terminal continues play of corresponding target multimedia data according to the current play record information of the first terminal.

6. The method of any of claims 1 to 5, wherein the target multimedia data comprises video data and/or audio data.

7. The method of any preceding claim, wherein the play record information comprises a multimedia data identification and a play progress time point corresponding to the target multimedia data; or
the play record information comprises a channel identification corresponding to the target multimedia data.

8. A method for playing multimedia data, comprising, at a first terminal:
sending (201) to a server a request for acquiring play record information, the play record information comprising information regarding multimedia data being played on a given terminal, the play record information being indicative of the progress reached in outputting target multimedia data or the channel on which target multimedia data is output;
receiving (202) play record information of a second terminal bound to the first terminal, which is sent by the server;
continuing (203) play of corresponding target multimedia data according to the play record information.

9. An apparatus for controlling playing of multimedia data, comprising:
a first receiving module (710) for receiving a request for acquiring play record information, the request being sent by a first terminal, the play record information comprising information regarding multimedia data being played on a given terminal, the play record information being indicative of the progress reached in outputting target multimedia data or the channel on which target multimedia data is output;
an acquiring module (720) for acquiring play record information of a second terminal bound to the first terminal;
a controlling module (730) for controlling the first terminal to continue play of corresponding target multimedia data according to the play record information.

10. The apparatus of claim 9, wherein the acquiring module (720) comprises a sending sub-module (721), a receiving sub-module (722) and an acquiring sub-module (723), wherein the sending sub-module is configured to send, to all terminals bound to the first terminal, notifications of uploading play record information respectively;
the receiving sub-module is configured to receive play record information sent by said all terminals;
the acquiring sub-module is configured to acquire, from the play record information sent by said all terminals, the play record information of the second terminal.

11. The apparatus of claim 10, wherein the acquiring sub-module (723) is configured to:
determine the second terminal from said all terminals, the second terminal satisfying at least one of the following conditions of: having the same type as the first terminal, being the last one updating the play record information, having logged in a first account which is the same as or associated with that logged in by the first terminal.

12. The apparatus of claim 9, wherein the acquiring module (720) is configured to:
receive the play record information, which is sent by the second terminal when it closes a multimedia application.

13. An apparatus for playing multimedia data, comprising:
a sending module (1010) for sending to a server a request for acquiring play record information, the play record information comprising information regarding multimedia data being played on a given terminal, the play record information being indicative of the progress reached in outputting target multimedia data or the channel on which target multimedia data is output;
a receiving module (1020) for receiving play record information of a second terminal bound to the first terminal, which is sent by the server;
a playing module (1030) for continuing play of corresponding target multimedia data according to the play record information.

14. A computer program including instructions for executing the steps of a method for playing multimedia data according to any one of claims 1 to 8, when said program is executed by a computer.

15. A recording medium readable by a computer and having recorded thereon a computer program including instructions for executing the steps of a method for playing multimedia data according to any one of claims 1 to 8.
